Europäisches Patentamt

European Patent Office

Office européen des brevets

(19)

(11) Veröffentlichungsnummer: **0 009 573**
A1

## (12) EUROPÄISCHE PATENTANMELDUNG

(21) Anmeldenummer: **79102872.3**

(22) Anmeldetag: **09.08.79**

(51) Int. Cl.³: **G 03 D 3/13**
**F 16 C 13/00**

(30) Priorität: **29.08.78 DE 2837658**

(43) Veröffentlichungstag der Anmeldung:
**16.04.80 Patentblatt 80/8**

(84) Benannte Vertragsstaaten:
**CH FR GB IT**

(71) Anmelder: **GTC Gibson Technical Company Limited**
**Heiligkreuz 19**
**FL-9490 Vaduz(LI)**

(72) Erfinder: **Kümmerl, Klaus**
**Kohlenhofstrasse 60**
**D-8500 Nürnberg(DE)**

(74) Vertreter: **Kapfinger Wolfgang**
**c/o DURST AG Fabrik Fototechnischer Apparate**
**Köstlandstrasse 12**
**I-39042 Brixen (BZ)(IT)**

(54) **Transportwalze für ein Gerät zur Nassbehandlung fotografischer Schichtträger und Verfahren zur Herstellung einer solchen Walze.**

(57) Eine Transportwalze für ein Gerät zur Naßbehandlung fotografischer Schichten besteht aus einem eine oder mehrere Halteleisten (3a) aufweisenden Walzenkern (1,3) und einem auf diesen aufgezogenen aus Schaumstoff bestehenden Zylinder (4).

Zur Herstellung der Transportwalze wird in einem zylinderförmigen, vorzugsweise quaderförmigen, Stück Schaumstoff eine Bohrung zugebracht, das Schaumstoffstück mit dieser Bohrung über den Halteleisten (3a) aufweisenden Walzenkern (1,3) gezogen und der Schaumstoff durch ein bekanntes Bearbeitungsverfahren, beispielsweise einem Schleifvorgang, auf seine endgültige rotationszylindrische Form gebracht.

./...

Croydon Printing Company Ltd.

Fig. 1

- 1 -

Transportwalze für ein Gerät zur Naßbehandlung
fotografischer Schichtträger und Verfahren zur
Herstellung einer solchen Walze.

Die Erfindung betrifft eine Transportwalze für
ein Gerät zur Naßbehandlung fotografischer Schichtträger und ein Verfahren zur Herstellung einer
solchen Walze.

Für bestimmte Naßbehandlungsprozesse für fotografische Schichtträger, bei denen der Transport
der Schichtträger durch die Behandlungsflüssigkeiten mit Hilfe mindestens eines Transportwalzenpaares erfolgt, ist es vorteilhaft, dass die
Oberfläche der Transportwalzen aus einem durch
die verwendeten Chemikalien nicht zersetzbaren
Schaumstoff besteht. Während bei bisher eingesetzten Transportwalzen mit einer Oberfläche aus
Gummi die Verbindung zwischen dem zumeist aus
rostfreiem Stahl bestehenden Walzenkern und der
Gummiauflage durch Verkleben hergestellt wurde
ohne dass die Dauerhaftigkeit der Klebeverbin-

- 2 -

dung durch die Einwirkung der verwendeten Chemikalien beeinträchtigt wurde, ist es sehr schwierig, einen Klebstoff zu finden, der es gestattet, eine solche dauerhafte Verbindung zwischen einem Walzenkern und einer Schaumstoffauflage einer Transportwalze herzustellen, die bei allen bisher bekannten Naßbehandlungsprozessen eine problemlose und dauerhafte Verklebung gewährleistet. Die Schwierigkeiten können auch nicht dadurch umgangen werden, dass der Stahlkern mit einer Kunststoffschicht versehen und die Klebeverbindung zwischen dieser und der Schaumstoffauflage hergestellt wird. Insbesondere bei Verwendung von Polyäther-Schaumstoffauflagen, die bei Transportwalzen für ein nach dem sogenannten CIBACHROME-Verfahren (CIBACHROME ist ein Warenzeichen der Ciba-Geigy Photochemie AG) arbeitenden Naßbehandlungsgerät eingesetzt wurden, konnte bei nahezu allen auf dem Markt befindlichen Klebestoffen, die zur Verbindung der Schaumstoffauflage mit einem Walzenkern aus rostfreiem Stahl mit oder ohne Kunststoffbeschichtung verwendet wurden, festgestellt werden, dass sich die Schaumstoffauflage nach einer bestimmten Anzahl von Betriebsstunden vom Kern löste oder dass der Klebestoff durch Einwirkung der Behandlungschemikalien chemische Stoffe freigab, die das Behandlungsergebnis beeinträchtigten.

0009573

- 3 -

Aufgabe der Erfindung ist es, eine Transportwalze mit einer Schaumstoffauflage zu schaffen, die einen Einsatz in allen bisher bekannten Behandlungschemikalien für fotografische Schichtträger, insbesondere für Chemikalien der CIBACHROME-Entwicklungsprozesse gestattet, wobei eine dauerhafte und sichere Verbindung zwischen dem Transportwalzenkern und der Schaumstoffauflage gewährleistet ist und keine das Ergebnis des Naßbehandlungsverfahrens beeinträchtigende chemische Reaktionen auftreten, sowie ein Verfahren zur Herstellung einer solchen Transportwalze anzugeben.

Die Aufgabe wird durch die in den Ansprüchen 1 und 11 gekennzeichnete Erfindung gelöst.

Die Erfindung ermöglicht, bei einem einfachen Herstellungsverfahren, eine dauerhafte Verbindung zwischen dem Kern der Transportwalze und der Schaumstoffauflage ohne Verwendung von Klebestoffen, sodass ein Einsatz derartiger Transportwalzen in jedem Naßbehandlungsprozess vorgesehen werden kann, ohne dass durch die im Entwicklungsprozeß verwendeten Chemikalien ein Einfluß auf die Güte der Verbindung ausgeübt werden oder eine das Behandlungsergebnis beeinträchtigende chemische Veränderung der Behandlungsflüssigkeit eintreten

- 4 -

könnte.

Weitere Vorteile und Eigenschaften der Erfindung ergeben sich aus den Unteransprüchen im Zusammenhang mit der Beschreibung von Ausführungsbeispielen, die im folgenden anhand von Zeichnungen eingehend erörtert werden. Dabei zeigen:

Figur 1 eine erfindungsgemäße Transportwalze in einer Längsansicht;

Figur 2 einen Schnitt durch die Transportwalze von Figur 1 entlang der Geraden A-A;

Figur 3 einen Querschnitt ähnlich dem in Figur 2 einer Schaumstoffauflage vor deren Verbindung mit dem Kern einer erfindungsgemäßen Transportwalze;

Figur 4 den Querschnitt eines weiteren Ausführungsbeispiels einer erfindungsgemäßen Transportwalze.

Der Kern einer Transportwalze besteht aus einer Achse 1 kreisförmigen Querschnitts aus einem metallischen Werkstoff, vorzugsweise aus rostfreiem Stahl, deren Enden Einkerbungen 2 zur Verbindung mit eventuellen Elementen zur Bewegungsübertragung, beispielsweise Zahnrädern, aufweisen, und einem im Mittelteil der Achse 1 angeformten Haltestück 3 aus Kunststoff. Die Endstücke der Achse 1 weisen einen geringeren Durchmesser als deren mittlerer

- 5 -

Teil auf. Das Haltestück 3 wird beispielsweise in einem gießtechnischen Verfahren hergestellt, wobei die Achse 1 entsprechend in die Gußform eingelegt ist. Beim Auskühlen des Haltest+cks 3 entsteht aufgrund des Schrumpfverhaltens des verwendeten Kunststoffs eine feste Verbindung zwischen der Achse 1 und dem Haltestück 3. Zur Verbesserung dieser Verbindung ist es möglich, das Mittelstück der Achse 1 mit einer Reihe von Kerben oder Erhebungen zu versehen. Parallel zur Längsachse weist das ansonsten zylindrische Haltestück 3 zwei Halteleisten 3a T-förmigen Querschnitts auf, die an den Enden gegen die Achse 1 hin abgeschrägt und deren Kanten vorzugsweise abgerundet sind. Der mit dem Kern der Transportwalze zu verbindende Schaumstoffbelag hat die Form eines Zylinders 4 mit einer zentrischen, zur Zylindererzeugenden parallelen kreisrunden Bohrung 5, deren Durchmesser geringer als der Durchmesser des zylindrischen Teils des Haltestücks ist. Beispielsweise beträgt der Durchmesser der Bohrung 5 5mm, während der Durchmesser des rotationszylindrischen Teils des Haltestücks 3 9,5mm beträgt. Bei der betriebsbereiten Transportwalze ist der Schaumstoffzylinder 4 über das Haltestück 3 gezogen, wobei sich der Schaumstoff aufgrund seiner Elastizität um den zylindrischen Teil und die T-förmigen Halteleisten anlegt. Sind deren Kanten abgerundet, kann keine Verletzung der Schaumstoffoberfläche im Bereich der Bohrung 5 auftreten. Dadurch, dass der Durchmesser der Bohrung 5 geringer als der des Haltestücks ist, kommt auf diese Weise eine verdrehsichere Verbindung zwischen dem Walzenkern und der Schaumstoffauflage zustande.

Die Herstellung der Transportwalze erfolgt in vorteilhafter Weise in folgenden Schritten:

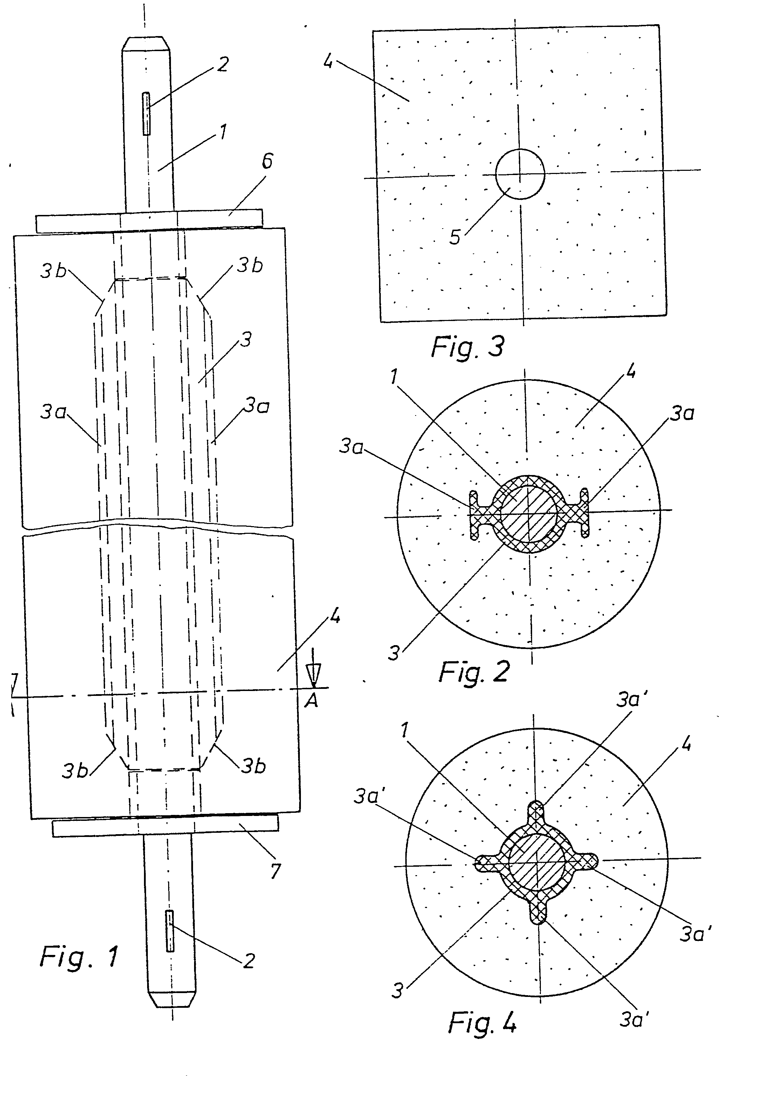

Zuerst wird das Haltestück 3 an die Achse 1 angeformt. In ein quaderförmiges Stück Schaumstoff, beispielsweise aus Polyätherschaum, mit vorzugsweise quadratischem Querschnitt, dessen Seitenlänge größer als der Durchmesser der fertigen Schaumstoffauflage ist, wird die Bohrung 5 gebohrt. Darauf wird das quaderförmige Schaumstoffstück mit seiner Bohrung 5 über die Achse 1 und das Haltestück 3 gezogen, wobei die abgeschrägten Flanken 3b der T-förmigen Halteleisten den Überziehvorgang erleichtern. Zuletzt wird die Achse 1 in eine geeignete Vorrichtung eingespannt und der Quader zu einem Drehzylinder geschliffen oder durch ein anderes bekanntes Arbeitsverfahren in die gewünschte zylindrische Form gebracht. Auf diese Weise erhält man eine zur Drehachse parallele Oberfläche der Schaumstoffauflage, auch wenn beim Bohrvorgang eine Versetzung der Bohrung gegenüber der vorgesehenen Achse stattgefunden hat. Durch dieses Herstellungsverfahren wird auch gewährleistet, dass die Oberfläche der Schaumstoffauflage unabhängig von den Auswirkungen der durch das Haltestück hervorgerufenen Verformungen rotationszylindrisch ist. Die Achaumstoffauflage bildet nun mit dem Kern eine Einheit und kann gegenüber diesem nicht über die elastische Verformung hinaus verdreht werden. Die Schrägflächen 3b sichern die Schaumstoffauflage überdies gegen eine Verschiebung in Richtung der Drehachse, da sich der Schaumstoff im Bereich der Bohrung 5 an diese Schrägflächen anschmiegt. Eine weitere Sicherung gegen eine solche axiale Verschiebung, kann noch dadurch erhalten werden, dass zwei Ringe 6,7 gleichen oder geringeren Durchmessers als der Durchmesser des Schaumstoffzylinders auf die Achse 1 aufgeschoben und mit dieser in herkömmlicher Weise unverrückbar verbunden werden. Diese Ringe geben bei entsprechender Dimensionierung auch einen Schutz gegenüber zu starker Verformung der Schaumstoffauflagen, wenn eine Reihe von Walzen zu Lagerzwecken gestapelt wird. Das Haltestück, deren bevorzugte Querschnittsform in Figur 2 angegeben ist, kann auch von dieser verschiedene

- 8 -

Querschnittsformen aufweisen. Beispielsweise können nur eine oder mehr als zwei der dargestellten T-förmigen Leisten vorhanden sein oder die Leisten eine andere Form aufweisen.

In Figur 4 ist eine weitere Ausführungsform eines solchen Haltestücks 3' dargestellt, das um einen kreiszylindrischen Grundkörper herum vier I-förmige Halteleisten 3a' mit vorzugsweise abgerundeten Kanten aufweist, die ebenfalls einen guten Schutz gegen Verdrehung des Schaumstoffzylinders 4 bieten. Allerdings steht bei einer solchen Anordnung die Gefahr, dass der Schaumstoff sich nicht mehr vollkommen an die Zylinderoberfläche des Haltestücks anschmiegen kann und somit der Verdrehungsschutz gegenüber der in Figur 2 dargestellten Ausführungsform weniger wirksam ist.

- 9 -

Patentansprüche:

1. Transportwalze für ein Gerät zur Naßbehandlung fotografischer Schichtträger
   gekennzeichnet
   durch einen eine oder mehrere Halteleisten (3a, 3a') aufweisenden Walzenkern
   (1, 3), der durch einen aus Schaumstoff
   bestehenden Zylinder (4) umgeben ist.

2. Transportwalze nach Anspruch 1,
   dadurch gekennzeichnet,
   dass die Halteleisten an einem Haltestück (3) rotationszylindrischer Grundstruktur angebracht sind.

3. Transportwalze nach Anspruch 2,
   dadurch gekennzeichnet,
   dass das Haltestück (3) an eine Achse (1)
   angeformt ist.

4. Transportwalze nach Anspruch 3,
   dadurch gekennzeichnet,
   dass das Haltestück (3) aus Kunststoff und
   die Achse (1) aus einem metallischen Werkstoff besteht.

5. Transportwalze nach einem der vorhergehenden Ansprüche,

dadurch gekennzeichnet,

dass die Halteleiste(n) (3a) einen T-förmigen
oder I-förmigen Querschnitt aufweisen.

6. Transportwalze nach einem der vorhergehenden
Ansprüche,

dadurch gekennzeichnet,

dass die Kanten der Halteleisten abgerundet
sind.

7. Transportwalze nach einem der vorhergehenden
Ansprüche,

dadurch gekennzeichnet,

dass die Halteleisten an ihren Enden Schrägflächen (3b) aufweisen.

8. Transportwalze nach einem der vorhergehenden
Ansprüche,

dadurch gekennzeichnet,

dass an den Stirnseiten des Schaumstoffzylinders (4) je ein mit der Achse (1) verbundener
Ring (7) angebracht ist, dessen Durchmesser
gleich oder geringer als der Durchmesser der
Transportwalze ist.

9. Verfahren zur Herstellung einer Transportwalze,

dadurch gekennzeichnet,

dass in einem zylinderförmigen, vorzugsweise quaderförmigen, Stück Schaumstoff (4) eine Bohrung (5) angebracht wird, das Schaumstoffstück mit dieser Bohrung über ein Halteleisten (3a, 3a') aufweisendes Kernstück (1,3) gezogen, und der Schaumstoff durch ein bekanntes Bearbeitungsverfahren auf seine endgültige Form gebracht wird.

10. Verfahren nach Anspruch 9,
dadurch gekennzeichnet,
dass die im Schaumstoff angebrachte Bohrung (5) einen geringeren Durchmesser als das Kernstück aufweist.

0009573

Fig. 1

Fig. 2

Fig. 3

Fig. 4

# 0009573

Europäisches Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | US - A - 2 280 125 (T.J. KAUFFELD) <br> * Seite 1, Spalte 2, Zeilen 14-55; Seite 2, Spalte 1; Figuren 1-5 * | 1-3,5 |
| | -- | |
| | US - A - 3 184 828 (C.W. DAMES JR.) <br> * Spalten 3-5; Figuren 1-9 * | 1-3 |
| | -- | |
| | DE - A - 2 138 185 (R. POTT) <br> * Seiten 3-5; Figuren 1-5 * | 1 |
| | -- | |
| | US - A - 1 414 449 (J. WITZIG) <br> * Seite 1, Zeilen 82-89; Figuren 1-3 * | 8 |
| | -- | |
| | DE - C - 197 076 (O.C. STRECKER) <br> . * Seite 1, Zeilen 52-61; Figur 1 * | 8 |
| | ---- | |

### KLASSIFIKATION DER ANMELDUNG (Int.Cl. 3)

G 03 D 3/13
F 16 C 13/00

### RECHERCHIERTE SACHGEBIETE (Int. Cl. 3)

G 03 D 3/13
5/06
B 41 F 31/26
B 65 H 27/00
D 21 F 3/08
1/40
F 16 C 13/00

### KATEGORIE DER GENANNTEN DOKUMENTE

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 05-12-1979 | BOEYKENS |

EPA form 1503.1  06.78